# EUROPEAN PATENT SPECIFICATION

(11) **EP 0 541 363 B1**
(45) Date of publication and mention of the grant of the patent: **21.01.1998**
(21) Application number: 92310120.8
(22) Date of filing: 05.11.1992
(51) Int. Cl.: E21B 33/035, B63B 21/08, F16L 37/14

(54) **Guide post interchangeability mechanism operated by remotely controlled vehicle**
Durch ein ferngesteuertes Fahrzeug betätigte Einrichtung zum Auswechseln von Führungssäulen
Mécanisme actionné par un véhicule télécommandé permettant l'interchangeabilité des éléments de guidage

(30) Priority: 05.11.1991 BR 9104817
(43) Date of publication of application: 12.05.1993
(73) Proprietor: PETROLEO BRASILEIRO S.A. - PETROBRAS, Rio de Janeiro (BR)
(72) Inventor: Reis, Ney Robinson Salvi dos, Rio de Janeiro (BR); Conti, Fábio Kerr Pinheiro, Rio de Janeiro (BR)
(74) Representative: Barlow, Roy James

(56) References cited:
- EP-A- 0 152 821
- GB-A- 2 140 515
- US-A- 4 288 172
- US-A- 4 439 068
- US-A- 4 523 878
- US-A- 4 582 448
- US-A- 4 701 074

## Description

This invention concerns a guide post interchanging mechanism operated by a remotely controlled vehicle (ROV). the purpose being to provide undersea modular equipment with a truly interchangeable guide post system.

One of the biggest problems in the undersea oil drilling business. particularly when this is carried out at great depths, is connected with designing guides to accept and to line up production modules. One of these guides, installed in temporary guide bases, manifolds, BOPs and others, is the guide post.

Not so long ago, when installing was done with the help of divers, if a post seized or was accidentally damaged, the answer was to take it out by loosening the four bolts holding it to its bed flange, and then to insert and to screw down another post to the same flange.

A fresh generation of guide posts was ushered in to deal with installing that could not be done by divers.

Such a system was put forward at SPE Latin American Engineering Conference held in Rio de Janeiro from 14 - 19 October 1990 in a paper No. SPE 21152 "Reusable Permanent Guide Base for Guideline System and Bending Troubles in Wellhead Systems", presented by Edson José Rebeschini and Jayme Hirotugo Ogura of Petrobras. Copies can be obtained from the Publications Manager, SPE, P.O. Box 833836, Richardson, TX 75083-3836, USA. The system is one in which the bottom part of the guide post is provided with J-slots to take the post. GL4 mandrel sections at the top of the post enable a remote connector to be used so that a guide line of up to 1 1/4" (3.2 cms) in diameter could be fixed to it, while a mechanical tool could also be used to recover the post. If the post becomes bent, a bar inserted into holes in the body of the post with the aid of a remotely controlled vehicle (ROV) enables the guide post to be recovered with the aid of the drill stem and wire lines attached to the bar. There is also a way of locking the post into its socket, so as to make drilling at the template easier whenever the post has to be changed with the aid of the ROV.

Although this system has been a big step forward in dealing with installing work where divers cannot be used, the fact is that none of the known systems are really practical, or efficient, and they are vulnerable.

To find an answer to these problems this invention concerns a guide post interchanging mechanism operated by an ROV that provides modular equipment, whether or not installed in deep water, with a guide post system which is really interchangeable, and which can be used whenever there is a need for an easy, swift, and efficient way of unlocking posts as a whole.

This is achieved with the aid of a guide post interchanging mechanism which is adapted to be operated by a remotely controlled vehicle and which consists of a base beam supporting the guide post socket. The mechanism of the invention is characterised by the features of claim 1.

There may be axially aligned guide cones on opposite sides of said beam.

The guide post stands in its socket in such a way that the operating channel inside the socket exactly matches the channel around the bottom of the guide post, locking of the guide post being achieved by rotating the locking pin which lies in said channel around the guide post, with the aid of an ROV or any other suitable tool.

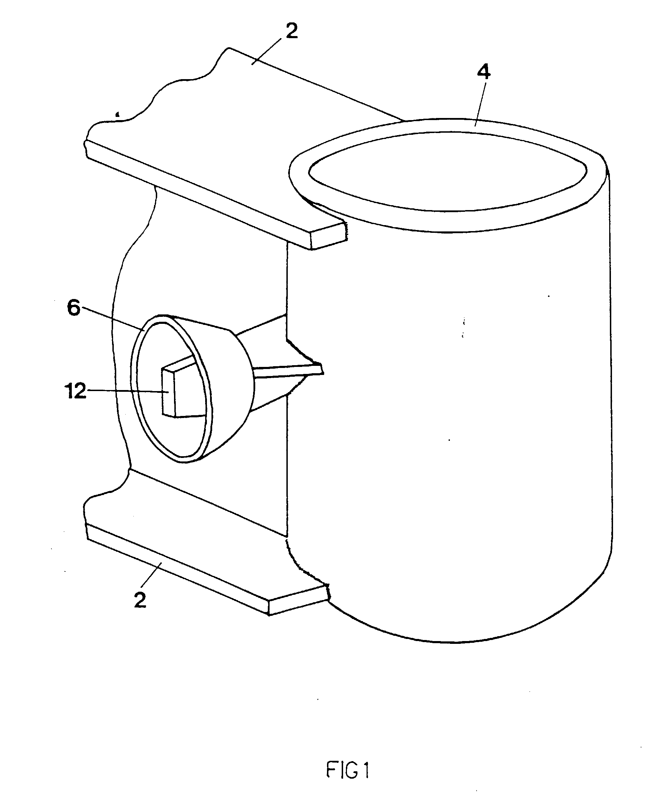

Merely by way of example, and to facilitate an understanding of the present invention, preferred embodiments thereof will now be described in greater detail with the aid of the attached drawings in which:-
FIGURE 1 is a perspective view of the exterior and the operating interface of a guide post interchanging mechanism worked by an ROV;

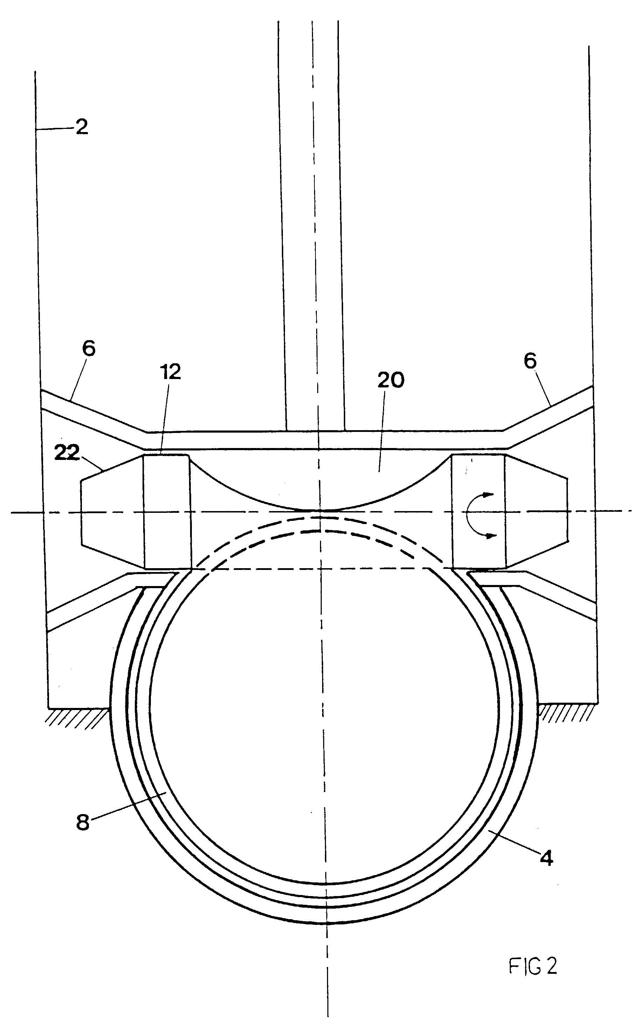

FIGURE 2 is an enlarged plan view of the mechanism of Figure 1;

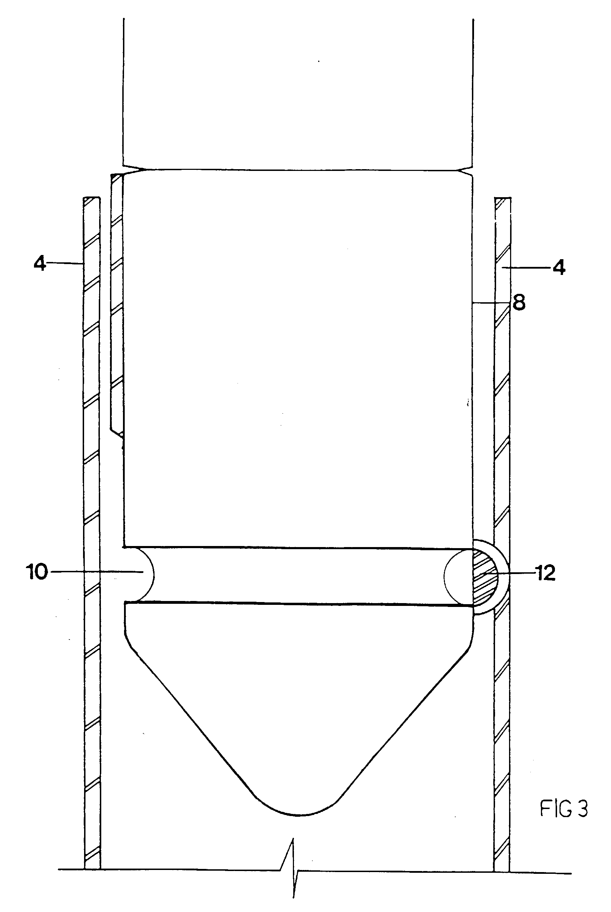

FIGURE 3 is an enlarged vertical section of the guide post locked into the guide base;

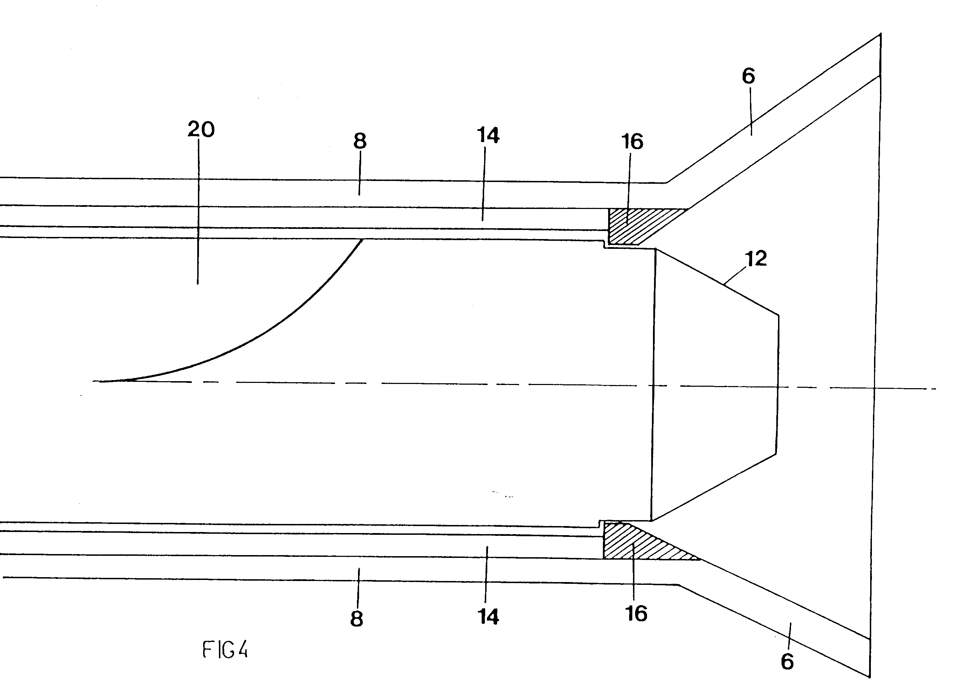

FIGURE 4 is an enlarged longitudinal sectional view showing the apparatus of Figure 2;
FIGURE 5 is an enlarged perspective of the locking pin with a hexagonal operating interface;
FIGURES 6A, 6B and 6C are front views of different operating interfaces with locking dogs and rotation stops; and
FIGURE 7 is a perspective enlarged view of the general kind of proposed operating interface.

As is to be seen from the Figures, the ROV-operated guide post interchanging mechanism of this invention consists of two guide cones 6 provided in the side of a base beam 2 which supports the guide post socket 4. These cones 6 extend coaxially and fit tangentially into the guide post socket 4 so as to create an operating channel within such socket 4, and the guide post 8 is provided with a channel 10 around its bottom to house a locking pin 12. The guide post 8 is so fitted into its respective socket 4 that the operating channel inside the socket 4, created by the guide cones 6, exactly matches the channel 10 around its bottom, while locking of the guide post 8 is achieved by rotating the guide pin 12 which fits into the channel 10 around the bottom of the guide post 8. This is effected by an ROV or suitable tool. The locking pin 12 is supported by a bearing 14 made from some non-stick material, preferably polytetrafluoroethylene such as Teflon (R.T.M.), and it has a fastening collar 16 at both of its ends to keep the locking pin 12 located axially in its proper position.

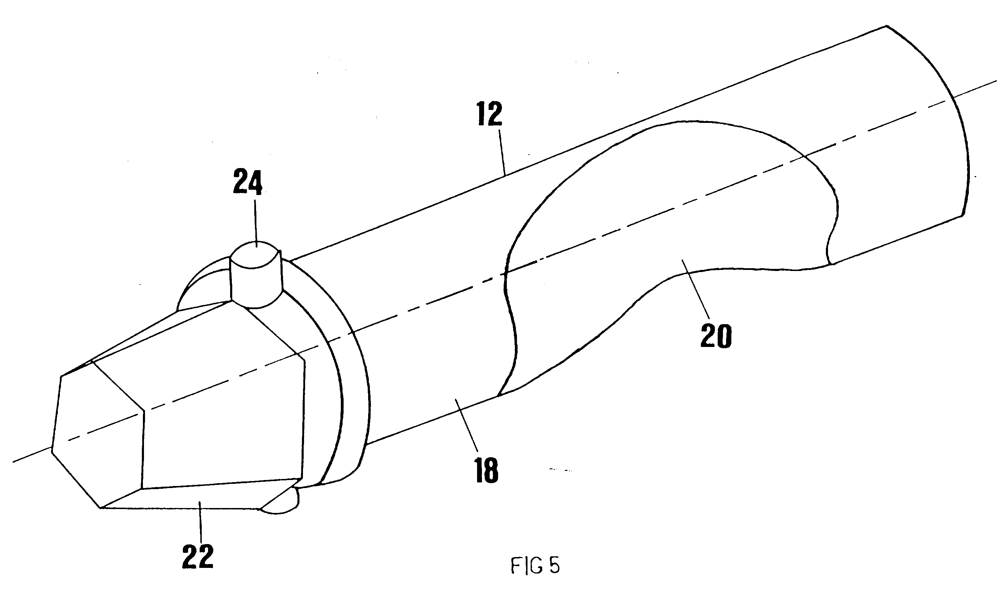

As can be seen from Figure 5, the locking pin 12 consists of a cylindrical body 18 with a central cut-out 20 shaped as a cylinder having its axis transverse to the axis of the pin 18 and displaced to one side of it so as to be tangential to the pin 12. This cut-out 20 is sometimes outside the channel 10 around the guide post 8 when the guide post is in its locked position, and sometimes inside the channel 10 in the unlocked position of the guide post 8. There is also a drive coupling member 22 at either end of the locking pin 12, although in Figure 5 only one end is shown. This coupling member 22 enables the locking pin 12 to be rotated with the aid of the manipulator or turning tool.

The drive coupling member 22, which enables the locking pin 12 to interface with the manipulator or turning tool, may be of the hexagonal kind, preferably tapered, as shown in Figure 5. Locking and/or unlocking is carried out by means of an impact tool coupled to a socket or box type spanner, and the coupling member may be provided with locking dogs 24, with rotation stops 26, where operation simply requires offering up one or more of the means referred to (manipulator or hydraulic tool) of the ROV, and rotating the coupling member through 180° to move the locking dog 24 from its blocked position to its other (released) position.

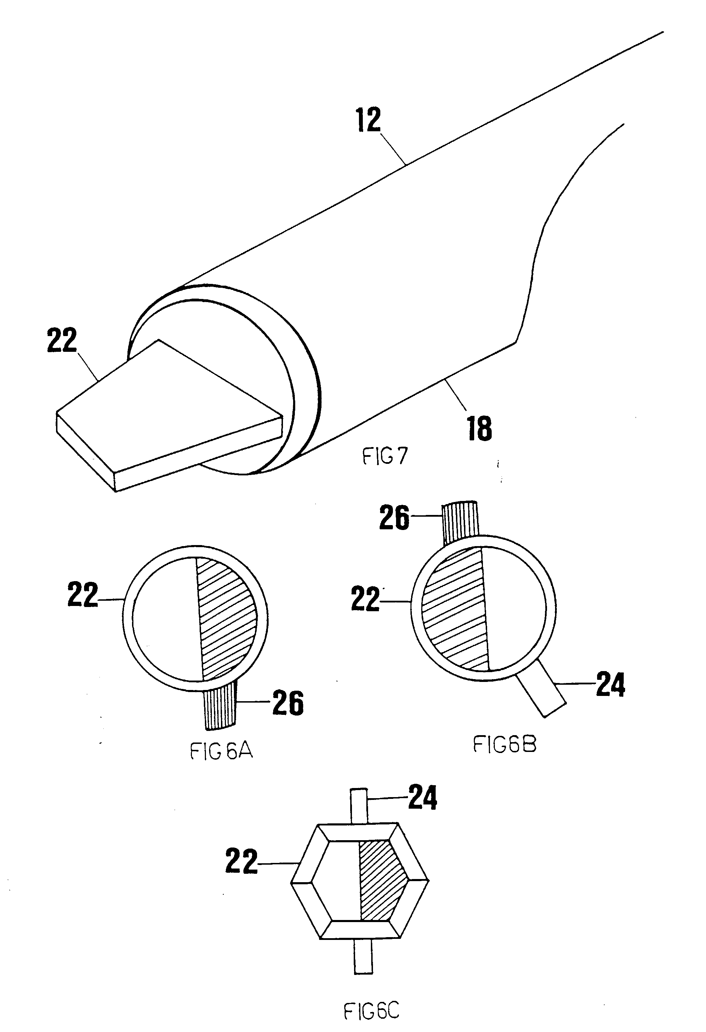

Yet a further alternative would be to provide a drive coupling member 22 of the general kind (for example trapezoidal as shown in Figure 7) which co-operates with all of the interface types presently in use.

The advantages to be gained from such a mechanism are obvious, since all of it lies protected within the base beam and hence the only way of getting access to it is by means of manipulators or turning tools which can be offered up from either side, thus allowing for a choice of action since, if the guide post is bent to one side and this hinders use of an ROV, unlocking and later removal can be effected from the opposite side.

The mechanism as a whole also has the advantage of not having any moving parts, or equipment outside the guide post socket, so there is no need for it to be provided with insertions or for any other kind of action by the ROV that might be unsettling or ineffective. All action takes place at the bottom of the guide post which only needs to be provided with the cable and remote connector from the surface, and this is a task that would have to be carried out whatever the system used for exchanging a guide post.

## Claims

1. A remotely operated mechanism for the interchanging of guide posts of the type installed on undersea structures such as temporary guide bases, blow-out preventers and the like, comprising at least one guide post (8) and a base beam (2) on said structure, the base beam supporting a guide post socket (4) having laterally thereof at least one guide cone (6) which is tangential to and enters said guide post socket (4), thus creating an operating channel inside the guide post socket (4); wherein said at least one guide post (8) is provided with a peripheral channel (10) proximate, in use, to the bottom end of the guide post to receive a locking pin (12); whereby said locking pin (12) in the operating channel inside the guide post socket can enter the peripheral channel (10) of the guide post (8) to lock the guide post (8) in the guide post socket (4).

2. A mechanism according to claim 1, wherein the or each said guide post socket (4) has two of said cones, mutually coaxially aligned, tangential to the socket and to a guide post when received therein, said cones being arranged on opposite sides of said base beam (2).

3. A mechanism according to claim 1 or 2, wherein said guide post (8) is adapted to be fitted into its socket (4) in such a way that said operating channel created by the guide cone (6) inside the socket (4) exactly matches a channel (10) around the bottom of the guide post (8), whereby locking of the guide post (8) into the socket (4) is achieved by means of turning the locking pin (12) which is housed in the peripheral channel (10) of the guide post (8), by means of a remotely operated vehicle or other suitable tool.

4. A mechanism according to any one of claims 1 to 3, wherein said locking pin (12) is seated in a bearing (14) of non-stick material having a holding collar (16) provided at both its ends.

5. A mechanism according to any one of claims 1 to 4, wherein said locking pin (12) consists of a cylindrical body (18) having in its middle a hole (20) and at either end a drive coupling member (22) to rotate such locking pin (12) with the aid of a manipulator or other turning tool.

6. A mechanism according to claim 5, wherein said drive coupling member (22) which brings about interfacing of said locking pin (12) with the manipulator or turning tool is of the hexagonal type, and is preferably tapered.

7. A mechanism according to claim 6, wherein said hexagonal drive coupling member (22) is provided with at least one locking dog (24) and with at least one rotation-limiting stop (26) to limit rotation to 180° during which said at least one locking dog (24) shifts from a blocked position to a released position.

8. A mechanism according to claim 5, wherein said drive coupling member (22) which brings about interfacing of the locking pin (12) with a manipulator or other turning tool is of the general trapezoidal shaped variety.

## Patentansprüche

1. Ferngesteuerter Mechanismus zum Auswechseln von Führungssäulen der Art, wie sie in Unterwasserstrukturen, wie z.B. vorübergehend aufgebauten Führungsfundamenten, Preventern usw., installiert sind, aufweisend wenigstens eine Führungssäule (8) und einen Fundamentbalken (2) auf der Struktur, welcher Fundamentbalken eine Führungssäulenmuffe (oder -sockel)(4) mit mindestens einem daran seitlich ausgebildeten Führungskegel (6) stützt, der tangential zu der Führungssäulenmuffe (4) ist und in diese eintritt, wodurch in der Führungssäulenmuffe (4) ein Bedienungskanal geschaffen wird; wobei die mindestens eine Führungssäule (8) mit einem Umfangskanal (10) versehen ist, der sich in Gebrauch nahe des unteren Endes der Führungssäule befindet, um einen Verriegelungsbolzen (12) aufzunehmen; wobei der Verriegelungsbolzen (12) im Bedienungskanal innerhalb der Führungssäulenmuffe in den Umfangskanal (10) der Führungssäule (8) eintreten kann, um die Führungssäule (8) in der Führungssäulenmuffe (4) zu verriegeln.

2. Mechanismus nach Anspruch 1, dadurch gekennzeichnet, daß die oder jede Führungssäulenmuffe (4) zwei der genannten Kegel aufweist, die zueinander koaxial ausgerichtet und tangential zu der Muffe und zu einer Führungssäule sind, wenn diese in der Muffe aufgenommen ist, wobei die Kegel auf gegenüberliegenden Seiten des Fundamentbalkens (2) angeordnet sind.

3. Mechanismus nach Anspruch 1 oder 2, dadurch gekennzeichnet, daß die Führungssäule (8) derart ist, daß sie so in ihre Muffe (4) paßt, daß der von dem Führungskegel (6) in der Muffe (4) gebildete Bedienungskanal genau einem Kanal (10) um das Ende der Führungssäule (8) entspricht, wobei das Verriegeln der Führungssäule (8) in der Muffe (4) durch das Drehen des Verriegelungsbolzens (12), der in dem Umfangskanal (10) der Führungssäule (8) untergebracht ist, mittels eines ferngesteuerten Fahrzeugs oder eines anderen geeigneten Werkzeugs erreicht wird.

4. Mechanismus nach einem der Ansprüche 1 bis 3, dadurch gekennzeichnet, daß der Verriegelungsbolzen (12) in einem Lager (14) aus Anti-Haft-Material gelagert ist, welcher einen Haltekragen (16) an seinen beiden Enden aufweist.

5. Mechanismus nach einem der Ansprüche 1 bis 4, dadurch gekennzeichnet, daß der Verriegelungsbolzen (12) aus einem zylindrischen Körper (18) besteht, der in seiner Mitte ein Loch (20) und an jedem Ende ein Antriebskupplungsglied (22) aufweist, um einen solchen Verriegelungsbolzen (12) mit Hilfe eines Manipulators oder eines anderen Drehwerkzeugs zu drehen.

6. Mechanismus nach Anspruch 5, dadurch gekennzeichnet, daß das Antriebskupplungsglied (22), das die Verbindung bzw. das Eingreifen des Verriegelungsbolzens (12) mit dem Manipulator oder dem Drehwerkzeug herstellt, vom hexagonalen Typ und vorzugsweise kegelförmig zuläuft.

7. Mechanismus nach Anspruch 6, dadurch gekennzeichnet, daß das hexagonale Antriebskupplungsglied (22) mit mindestens einem Verriegelungsanschlag (24) und mit mindestens einem die Drehung begrenzenden Stop (26) versehen ist, um die Drehung auf 180° zu beschränken, während welcher der mindestens eine Verriegelungsanschlag (24) von einer gesperrten Position zu einer gelösten Position verschoben wird.

8. Mechanismus nach Anspruch 5, dadurch gekennzeichnet, daß das Antriebskupplungsglied (22), welches die Verbindung bzw. das Eingreifen des Verriegelungsbolzens (12) mit einem Manipulator oder einem anderen Drehwerkzeug bewirkt, von der allgemein trapezoidförmigen Art ist.

## Revendications

1. Mécanisme actionné à distance pour le changement de piliers de guidage du type installé sur les structures sous-marines telles que les bases de guidage temporaires, les obturateurs et similaires, comprenant au moins un pilier de guidage (8) et une poutre de base (2) sur cette structure, la poutre de base portant une douille (4) de pilier de guidage comportant latéralement sur celle-ci au moins un cône de guidage (6) qui est tangentiel à la douille (4) de pilier de guidage et s'engage dans cette douille, en créant ainsi un canal opérationnel à l'intérieur de la douille (4) de pilier de guidage ; dans lequel ledit au moins un pilier (8) de guidage est muni d'un canal périphérique (10) proche, en cours d'utilisation, à l'extrémité de fond du pilier de guidage pour recevoir une broche de verrouillage (12) ; de manière que la broche de verrouillage (12) dans le canal opérationnel à l'intérieur de la douille de pilier de guidage puisse s'engager dans le canal périphérique (10) du pilier de guidage (8) pour verrouiller le pilier de guidage (8) dans la douille (4) de pilier de guidage.

2. Mécanisme selon la revendication 1, dans lequel la ou chaque douille de pilier de guidage comporte deux desdits cônes, alignés coaxialement mutuellement tangents à la douille et à un pilier de guidage lorsqu'ils sont reçus dans celui-ci, les cônes étant agencés sur des côtés opposés de la poutre (2) de base.

3. Mécanisme selon la revendication 1 ou 2, dans lequel le pilier (8) de guidage est adapté pour être agencé dans la douille (4) de telle manière que le canal opérationnel créé par le cône de guidage (6) à l'intérieur de la douille (4) viennent correspondre exactement avec le canal (10) autour du fond de pilier de guidage (8), de manière que le verrouillage du pilier de guidage (8) dans la douille (4) est réalisé en tournant la broche de verrouillage (12) qui est logée dans le canal périphérique (10) du pilier de guidage (8), au moyen d'un véhicule actionné à distance ou d'un autre outil adapté.

4. Mécanisme selon l'une quelconque des revendications 1 à 3, dans lequel la broche de verrouillage (12) est logée dans un palier (14) en matériau non adhérent comportant un collier (16) de retenue à chacune de ses extrémités.

5. Mécanisme selon l'une quelconque des revendications 1 à 4, dans lequel la broche de verrouillage (12) est constituée d'un corps cylindrique (18) comportant en son milieu un trou (20) et à chaque extrémité un organe (22) de couplage d'entraînement pour entraîner en rotation la broche de verrouillage (12) aux moyens d'un manipulateur ou d'un autre outil tournant.

6. Mécanisme selon la revendication 5, dans lequel l'organe (22) de couplage d'entraînement qui effectue une interface entre la broche (12) de verrouillage et le manipulateur ou l'outil tournant est de type hexagonal, et est de préférence effilé.

7. Mécanisme selon la revendication 6, dans lequel l'organe (22) de couplage d'entraînement hexagonal est muni d'au moins un taquet de verrouillage (24) et d'au moins une butée (26) de limitation de rotation pour limiter la rotation à 180° pendant laquelle ledit au moins un taquet de verrouillage (24) commute d'une position bloquée à une position libérée.

8. Mécanisme selon la revendication 5, dans lequel l'organe (22) de couplage d'entraînement qui effectue une interface entre la broche de verrouillage (12) et un manipulateur ou autre outil tournant est de la variété à forme générale trapézoïdale.
